# EUROPÄISCHE PATENTSCHRIFT

(11) **EP 2 413 103 B1**
(45) Veröffentlichungstag und Bekanntmachung des Hinweises auf die Patenterteilung: **26.04.2017**
(21) Anmeldenummer: 11006134.8
(22) Anmeldetag: 26.07.2011
(51) Int. Cl.: G01C 21/36

(54) **Technik zum Bestimmen von Points Of Interest für eine Navigationsvorrichtung**
Technique for determining points of interest for a navigation device
Technique de détermination de points d'intérêt pour un dispositif de navigation

(30) Priorität: 26.07.2010 DE 102010032229
(43) Veröffentlichungstag der Anmeldung: 01.02.2012
(73) Patentinhaber: Elektrobit Automotive GmbH, 91058 Erlangen (DE)
(72) Erfinder: Voßen, Tim, 53123 Bonn (DE); Reinhard, Christian, 90552 Röthenbach an der Pegnitz (DE)
(74) Vertreter: Thies, Stephan

(56) Entgegenhaltungen:
- WO-A1-2009/036052
- WO-A1-2009/083719
- US-A1- 2005 177 303
- US-A1- 2009 265 340

## Beschreibung

### Gebiet der Erfindung

Die vorliegende Erfindung betrifft eine Technik zum Bestimmen von Points Of Interest auf Basis digitaler kartographischer Daten für eine Navigationsvorrichtung. Diese Technik kann in Zusammenhang mit einer Zieleingabe Verwendung finden.

### Stand der Technik

Als "Points Of Interest", oder kurz POIs, werden in Zusammenhang mit Navigationsvorrichtungen (einschließlich Routenplanern) Orte bezeichnet, welche für einen Nutzer aufgrund von Dienstleistungsangeboten, touristischen Attraktionen oder Freizeitangeboten von besonderem Interesse sind. Beispielsweise können Tankstellen, Apotheken, Bankautomaten, Autowerkstätten, Unterkünfte, Museen, Kinos oder sonstige touristische Attraktionen als POIs ausgewiesen werden. POIs können durch eine Navigationsvorrichtung visuell (beispielsweise in Form von Symbolen oder POI-Listen) oder akustisch wiedergegeben werden.

Die Suche von POIs durch eine Navigationsvorrichtung beginnt gewöhnlicherweise damit, dass der Nutzer im Rahmen einer Zieleingabe eine POI-Klasse (z.B. Tankstelle) vorgibt. Die Navigationsvorrichtung ermittelt dann auf Basis kartographischer Daten sowie der aktuellen Position alle POIs der vorgegebenen POI-Klasse innerhalb eines vorgegebenen Suchradius. Der Suchradius kann dabei in der Navigationsvorrichtung voreingestellt sein oder vom Nutzer vorgegeben werden.

Aus EP 1 269 119 B1 ist ein Verfahren zur Zieleingabe an einer Navigationsvorrichtung bekannt, wobei einem Nutzer eine Zielnamenliste zur Auswahl eines Zielorts zur Verfügung gestellt wird, welche mit Hilfe eines Entfernungskriteriums erstellt wird. Hierfür werden all jene vorab gespeicherten Zielnamen aus einem Speicher ausgelesen und dem Nutzer in Form einer Zielnamenliste zur Verfügung gestellt, welche innerhalb eines vordefinierten oder vom Nutzer vorgegebenen Suchradius liegen.

Ein Suchverfahren für POIs auf Basis eines vorgegebenen Suchradius kann nachteilig sein, da die Suchzeit, welche proportional zur Anzahl prozessierter POIs innerhalb des vorgegebenen Suchradius ist, nicht vorhersehbar ist. So kann beispielsweise eine POI-Suche bei vorgegebenem Suchradius in einem dicht besiedelten Gebiet (beispielsweise in Ballungsräumen) zu einer großen Anzahl an POI-Treffern führen, wodurch einerseits die Suchzeit stark ansteigt und andererseits die Darstellbarkeit des Suchergebnisses unübersichtlich wird. Insbesondere werden durch Prozessierung und Darstellung einer großen Anzahl an POI-Treffern unnötig Ressourcen der Navigationsvorrichtung beansprucht, welche sonst für andere Operationen zur Verfügung stünden. Dieses Problem kann beispielsweise behoben werden, wenn der Suchradius jeweils den Gegebenheiten eines Suchorts angepasst wird. Die Vorgabe eines geeigneten Suchradius ist jedoch schwierig, da der Nutzer nicht im Voraus weiß, wie viele POIs innerhalb des vorgegebenen Suchradius liegen werden.

WO 2009/083179 A1 lehrt ein Server-Client-basiertes POI-Suchverfahren, bei dem auf Basis einer erfassten geografischen Position und eines vorgegebenen Suchfeldes POIs ermittelt werden. Das Suchfeld kann vergrößert werden, wenn die Zahl der gefundenen POIs ungenügend ist und eine vorgegebene Suchzeit noch nicht verstrichen ist. Suchradius und zu suchende POI-Kategorien werden im Zuge einer Suchanfrage als Suchkriterien an eine auf dem Server operierende Suchmaschine übergeben.

WO 2009/036052 A1 lehrt ebenso ein POI-Suchverfahren in der Umgebung einer erfassten Suchposition, wobei das Suchfeld während der Suche vergrößert werden kann. Das anfängliche Suchfeld und das vergrößerte Suchfeld sind in Zellen partitioniert, wobei die POI-Suche innerhalb der Suchfelder zellenweise durchgeführt wird. Im vergrößerten Suchfeld werden nur noch jene Zellen durchsucht, die nicht zum anfänglichen Suchfeld gehören.

### Kurzer Abriss

Der Erfindung liegt die Aufgabe zugrunde, ein Verfahren und eine Vorrichtung für die Bestimmung von POIs bereitzustellen, welche zumindest einen der oben erwähnten Nachteile vermeiden.

Zur Lösung dieser Aufgabe ist ein Verfahren zum Ermitteln von Points Of Interest (POIs) in einer Umgebung eines vorgegebenen Standorts mit bekannten Koordinaten auf Basis digitaler kartographischer Daten und einer von einem Benutzer vorgegebenen Suchzeit (tₛ) und einer vorgegebenen POI-Trefferzahl (N_{S}) vorgesehen, wobei das Verfahren durch eine in einem Kraftfahrzeug verbauten Navigationsvorrichtung oder durch ein tragbares Gerät durchgeführt wird, wobei das Verfahren die folgenden Schritte umfasst: Ermitteln eines den vorgegebenen Standort umfassenden anfänglichen Suchfelds auf Basis der kartographischen Daten; Suchen nach POIs im Suchfeld; Vergleichen einer Trefferzahl aufgefundener POIs mit der vorgegebenen POI-Trefferzahl (N_{S}); Einstellen einer Zeitmarge, die in einem festen Verhältnis zur vorgegebenen Suchzeit (tₛ) steht; Berechnen eines Schwellenwerts aus einer Differenz aus der vorgegebenen Suchzeit (tₛ) und der Zeitmarge; Vergleichen einer verstrichenen Suchzeit mit dem Schwellenwert; iteratives Vergrößern des Suchfelds und Suchen nach POIs im vergrößerten Suchfeld, wenn die Trefferzahl aufgefundener POIs kleiner als die vorgegebene POI-Trefferzahl (N_{S}) ist und wenn die verstrichene Suchzeit den Schwellenwert nicht übersteigt; und Beenden der POI-Suche, wenn die Trefferzahl aufgefundener POIs größer oder gleich der vorgegebenen POI-Trefferzahl (N_{S}) ist oder wenn die verstrichene Suchzeit größer als der Schwellenwert ist. Das Verfahren kann im Rahmen einer Zieleingabe von einer Navigationsvorrichtung durchgeführt werden.

Auf diese Weise wird einerseits sichergestellt, dass die POI-Suche in der Navigationsvorrichtung auf eine angemessene Zeitdauer beschränkt bleibt und somit nicht unnötig Ressourcen der Navigationsvorrichtung durch die POI-Ermittlung in Anspruch genommen werden. Andererseits kann die POI-Trefferzahl bereits vorab - unabhängig von der Anzahl der POIs innerhalb eines bestimmten Suchfeldes - eingegrenzt werden. Die vorgegebene POI-Trefferzahl (N_{S}) kann auch 1 betragen.

Die POIs können in verschiedene POI-Klassen eingeteilt sein. Beispielsweise können POIs der Klasse "Tankstelle", "Apotheke", "Kino" etc. jeweils zu einer POI-Klasse zusammengefasst werden. Diese Klassen können in Unterklassen unterteilt sein (z.B. in Hinblick auf Tankstellen unterschiedlicher Anbieter). Bei der POI-Ermittlung können POIs wenigstens einer vorgegebenen POI-Klasse oder POI-Unterklasse innerhalb des Suchfelds bestimmt werden.

Gemäß einer weiteren Ausführung werden die Suchzeit (t_{S}) und die POI-Trefferzahl (N_{S}) für jede der wenigstens einen vorgegebenen POI-Klasse vorgegeben, wobei das Suchfeld so lange vergrößert wird, bis die vorgegebene Suchzeit (t_{S}) verstrichen ist oder N_{S} POI-Treffer für jede vorgegebene POI-Klasse erreicht werden. Jenes Ereignis, welches früher eintritt, bedingt den Abbruch der POI-Ermittlung. Beispielsweise können zwei oder mehrere POI-Klassen für eine POI-Ermittlung ausgewählt werden und diesen zwei oder mehreren POI-Klassen jeweils eine gemeinsame oder verschiedene POI-Trefferzahlen (N_{S}) zugeordnet sein. Die POI-Ermittlung wird dann beendet, wenn die zugeordnete POI-Trefferzahl (N_{S}) für jede der zwei oder mehreren POI-Klassen erreicht wird, vorausgesetzt die vorgegebene Suchzeit (t_{S}) wurde vorher nicht überschritten.

Für die POI-Suche im Suchfeld können ferner POIs derselben oder verschiedener Klassen räumlich gruppiert werden, wobei jeweils geographisch nah beieinander liegende POIs zu einem POI-Cluster zusammengefasst und in einem Datenspeicher abgespeichert sind. Durch die räumliche Zusammenfassung von POIs zu POI-Cluster kann die POI-Suche im Suchfeld beschleunigt werden, wobei jeweils ein POI-Cluster vom Datenspeicher abgerufen und vorprozessiert werden kann, bevor die einzelnen POIs des jeweiligen abgerufenen POI-Clusters weiter prozessiert werden.

Eine verstrichene Suchzeit (t) kann während des Suchvorgangs (z.B. jeweils nach Prozessieren eines POI-Clusters) bestimmt oder aktualisiert werden. Die verstrichene Suchzeit (t) wird sodann mit der vorgegebenen Suchzeit (t_{S}) verglichen. Überschreitet die verstrichene Suchzeit (t) die vorgegebene Suchzeit (t_{S}), so wird die POI-Ermittlung beendet. Andernfalls wird mit der Prozessierung (z.B. eines weiteren POI-Clusters) fortgefahren. Alternativ hierzu kann die verstrichene Suchzeit (t) nach jeder Suchfeldvergrößerung oder nach jedem POI-Treffer bestimmt oder aktualisiert und mit der vorgegebenen Suchzeit (t_{S}) verglichen werden.

Die verstrichene Suchzeit (t) wird aus einer Differenz zwischen einem aktuellen Zeitpunkt (z.B. nach Prozessieren eines POI-Clusters) und einem Zeitpunkt, an dem die POI-Suche begonnen hat, bestimmt. Für die Bestimmung der verstrichenen Suchzeit (t) kann ein Zeitgeber verwendet werden, welcher die Zeit ab Start der POI-Ermittlung misst. Alternativ hierzu kann beispielsweise ein Prozessortakt verwendet werden, indem die Zahl von Prozessorzyklen zwischen dem Zeitpunkt, zu dem die Suche begonnen hat, und dem aktuellen Zeitpunkt bestimmt wird.

Angemessene Werte für die vorgegebene Suchzeit (t_{S}) liegen im Bereich zwischen 50 Millisekunden bis 10 Sekunden. Der Schwellenwert (T) ist dazu vorgesehen, die POI-Ermittlung bei Erreichen des Schwellenwerts (T) und noch vor Erreichen der vorgegebenen Suchzeit (t_{S}) abzubrechen. Auf diese Weise nimmt die Wahrscheinlichkeit ab, dass die vorgegebene Suchzeit (t_{S}) während zweier aufeinanderfolgender Suchzeitmessungen überschritten wird.

Zusätzlich zur vorgegebenen Suchzeit (t_{S}) kann die vorgegebene POI-Trefferzahl (N_{S}) für das Beenden der POI-Ermittlung herangezogen werden. Eine aktuelle Treffer-Zahl (N) kann hierfür nach Prozessieren eines POI-Clusters bestimmt oder aktualisiert und mit der vorgegebenen Trefferzahl (N_{S}) verglichen werden. Erreicht oder übersteigt die aktuelle Trefferzahl (N) die vorgegebenen Trefferzahl (N_{S}), so wird die POI-Ermittlung abgebrochen. Andernfalls wird beispielsweise mit der Prozessierung eines weiteren POI-Clusters fortgefahren. Alternativ hierzu kann die aktuelle Trefferzahl (N) nach jeder Suchfeldvergrößerung oder nach jedem POI-Treffer innerhalb eines POI-Clusters bestimmt oder aktualisiert und mit der vorgegebenen POI-Trefferzahl (N_{S}) verglichen werden. Gemäß einer weiteren Ausführung kann - ganz analog zur Zeitmarge (Δt) - auch für die vorgegebene POI-Trefferzahl (N_{S}) eine Marge (ΔN) festgelegt werden. Auf diese Weise kann die POI-Ermittlung noch vor Erreichen der vorgegebenen POI-Trefferzahl (N_{S}) bei Erreichen einer Schwelle abgebrochen werden, wobei die Schwelle als Differenz der vorgegebenen POI-Trefferzahl (N_{S}) und der Marge (ΔN) berechnet wird. Somit kann die Wahrscheinlichkeit eines Überschreitens der vorgegebenen POI-Trefferzahl (N_{S}) während zweier aufeinanderfolgender Suchzeitmessungen reduziert werden.

Bei der POI-Suche wird das den vorgegebenen Standort umfassende Suchfeld iterativ solange vergrößert, bis die vorgegebene Suchzeit (t_{S}) oder die vorgegebene POI-Trefferzahl (N_{S}) erreicht sind oder das iterativ vergrößerte Suchfeld einen vorgegebenen Schwellenwert (A_{M}) für die Suchfeldgröße erreicht hat (je nachdem, welches Ereignis zuerst eintritt). Eine Suchfeldvergrößerung wird dabei dann beispielsweise durchgeführt, wenn vorher alle im Suchfeld liegenden POI-Cluster prozessiert wurden.

Das anfängliche Suchfeld kann hinreichend klein ausgewählt werden, so dass nur wenige POIs bzw. wenige POI-Cluster innerhalb des anfänglichen Suchfelds liegen. Die Größe des anfänglichen Suchfelds wird auf Basis einer abgespeicherten und zu den kartographischen Daten zuordenbaren lokalen POI-Dichte ausgewählt. Ein anfänglich kleines Suchfeld weist den Vorteil auf, dass nur wenige POI-Cluster bzw. POIs prozessiert werden, wodurch Zeit und Ressourcen beim Suchvorgang gespart werden. Befindet sich kein POI-Cluster in dem anfänglichen Suchfeld, so wird das Suchfeld so lange vergrößert, bis wenigstens ein POI-Cluster im Suchfeld gefunden wird. Das Suchfeld ist vorzugsweise rechtwinklig ausgebildet. Die Vergrößerung des Suchfelds kann dabei derart erfolgen, dass seine Fläche oder alle Seitenlängen bei jedem Vergrößerungsschritt verdoppelt werden.

Ferner kann das Verfahren den Schritt des Sortierens der ausgewählten POIs in Abhängigkeit ihrer Entfernung zum vorgegebenen Standort sowie das Aufnehmen der sortierten POIs in einer Ergebnisliste umfassen. Die Ergebnisliste kann im Zusammenhang mit einer Zieleingabe einem Nutzer präsentiert werden.

Die Erfindung sieht ebenfalls ein Computerprogrammprodukt mit Programmcode zum Durchführen des Verfahrens vor, wenn das Computerprogrammprodukt auf einer Computereinrichtung ausgeführt wird. Das Computerprogrammprodukt kann hierfür auf einem computerlesbaren Aufzeichnungsmedium abgespeichert sein.

Weiterhin sieht die Erfindung eine Vorrichtung zum Ermitteln von Points Of Interest, oder POIs, in einer Umgebung eines vorgegebenen Standorts mit bekannten Koordinaten auf Basis digitaler kartographischer Daten und einer von einem Benutzer vorgegebenen Suchzeit und einer vorgegebenen POI-Trefferzahl vor, wobei die Vorrichtung eine in einem Kraftfahrzeug verbaute Navigationsvorrichtung oder ein tragbares Gerät ist, wobei die Vorrichtung umfasst: eine zentrale Verarbeitungseinheit zum Einstellen einer Zeitmarge, die in einem festen Verhältnis zur vorgegebenen Suchzeit steht, und zum Berechnen eines Schwellenwerts aus einer Differenz aus der vorgegebenen Suchzeit und der Zeitmarge; einen Datenspeicher zur Speicherung digitaler kartographischer Daten; eine Bestimmungseinrichtung, die eingerichtet ist, um ein den vorgegebenen Standort umfassendes anfängliches Suchfeld auf Basis der kartographischen Daten zu ermitteln und iterativ zu vergrößern ; eine Sucheinrichtung, die eingerichtet ist, um POIs im Suchfeld zu suchen; und eine Einrichtung zur Bestimmung einer verstrichenen Suchzeit und einer POI-Trefferzahl von der Sucheinrichtung aufgefundener POIs während der POI-Ermittlung, wobei die Einrichtung ferner eingerichtet ist, die Trefferzahl aufgefundener POIs mit der vorgegebenen POI-Trefferzahl zu vergleichen, eine verstrichene Suchzeit mit dem Schwellenwert zu vergleichen, und die POI-Suche abzubrechen, wenn die Trefferzahl aufgefundener POIs größer oder gleich der vorgegebenen POI-Trefferzahl ist oder wenn die verstrichene Suchzeit größer als der Schwellenwert ist, wobei die Bestimmungseinrichtung eingerichtet ist, das Suchfeld iterativ zu vergrößern, wenn die Trefferzahl aufgefundener POIs kleiner als die vorgegebene POI-Trefferzahl ist und wenn die verstrichene Suchzeit den Schwellenwert nicht übersteigt.

Die Vorrichtung kann ferner eine Eingabeeinrichtung zur Eingabe einer vorgegebenen Suchzeit (t_{S}) und/oder einer vorgegebenen POI-Trefferzahl (N_{S}), eine Einrichtung zur Bestimmung von Suchzeit (t) und POI-Trefferzahl (N) während der POI-Ermittlung, eine Sortiereinrichtung, die dazu eingerichtet ist, aufgefundene POIs in Abhängigkeit ihrer Entfernung zum vorgegebenen Standort zu sortieren und in einer Ergebnisliste aufzunehmen sowie eine Ausgabeeinrichtung zum Darstellen der Ergebnisliste umfassen.

Gemäß einer Ausführung kann der Datenspeicher ferner eine POI-Datenbank umfassen, in welcher geographisch nah beieinander liegende POIs als POI-Cluster zusammengefasst und abgespeichert sind. Ferner können lokale POI-Dichten abgespeichert sein. Diese sind jeweils mit den kartographischen Daten im Datenspeicher verknüpft und diesen eindeutig zuordenbar.

Gemäß einer weiteren Ausführung kann die Vorrichtung eine Einrichtung zum Aufbau einer Online-Verbindung umfassen, um Daten über ein Netzwerk auszutauschen. Auf diese Weise können aktualisierte POI-Datenbanken, aktualisierte kartographische Daten (sowie Ausschnitte davon) und/oder kartographische Daten mit vorgegebener Anzahl und Art von POI-Klassen oder POI-Clustern für die POI-Ermittlung ausgewählt werden. Hierfür können kartographische Daten im Netzwerk gemäß eines Suchwunsches vorprozessiert und der Vorrichtung für die POI-Ermittlung zur Verfügung gestellt weden. Durch die Verwendung vorprozessierter kartographischer Daten mit ausgewählten POI-Klassen oder POI-Clustern kann die POI-Ermittlung in der Vorrichtung weiter beschleunigt werden. Ferner können auf diese Weise POI-Ergebnisse innerhalb des Netzwerks zur Verfügung gestellt werden.

### Kurze Beschreibung der Zeichnungen

Weitere Einzelheiten, Vorteile und Aspekte der hier beschriebenen Erfindung ergeben sich aus den nachfolgenden Zeichnungen. Es zeigen:
- Fig. 1: eine Navigationsvorrichtung gemäß einem Ausführungsbeispiel der vorliegenden Erfindung; und
- Fig. 2: ein Verfahren gemäß einem Ausführungsbeispiel der vorliegenden Erfindung.

### Detaillierte Beschreibung

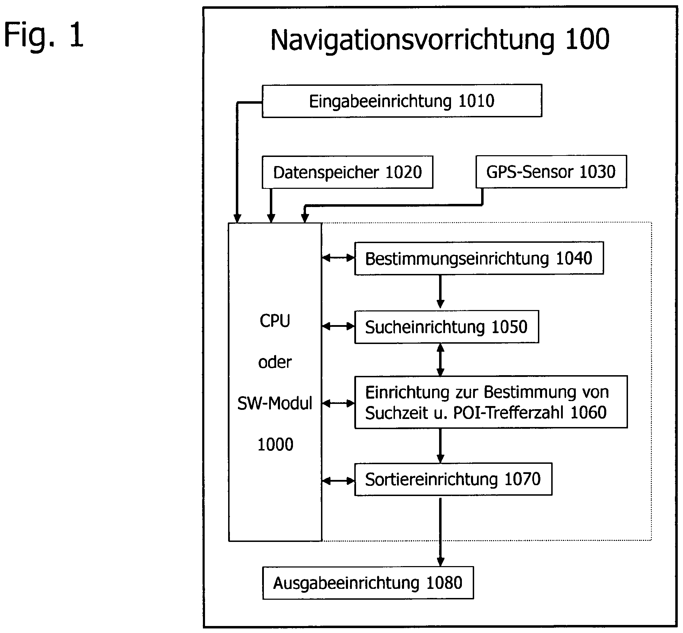

Fig. 1 zeigt in Form eines Blockdiagramms ein Ausführungsbeispiel einer erfindungsgemäßen Vorrichtung 100 in Gestalt einer Navigationsvorrichtung. Die Navigationsvorrichtung 100 kann in einem Kraftfahrzeug verbaut sein oder als tragbares Gerät (Personal Navigation Device, PND) ausgeführt sein. Es versteht sich, dass die Vorrichtung 100 oder Teile davon beispielsweise auch in einem Rechner (z.B. als Routenplaner), einem Personal Digital Assistant (PDA) oder in einem Mobiltelefon implementiert sein können.

Die Navigationsvorrichtung 100 umfasst eine Kernfunktionalität 1000, welche beispielsweise als CPU ("Central Processing Unit", zentrale Verarbeitungseinheit) oder Mikroprozessor oder als Softwaremodul (SW-Modul) implementiert sein kann. Ferner umfasst die Navigationsvorrichtung 100 eine Eingabeeinrichtung 1010, einen Datenspeicher 1020, einen GPS-Sensor 1030 eine Bestimmungseinrichtung 1040, eine Sucheinrichtung 1050, eine Einrichtung zur Bestimmung einer Suchzeit und einer Trefferzahl 1060, eine Sortiereinrichtung 1070 und eine Ausgabeeinrichtung 1080.

Die Bestimmungseinrichtung 1040, die Sucheinrichtung 1050, die Einrichtung zur Bestimmung von Suchzeit und POI-Trefferzahl 1060 sowie die Sortiereinrichtung 1070 können jeweils als eigenständige, mit der Kernfunktionalität 1000 in Kommunikation stehende Einrichtung oder als Teil der Kernfunktionalität 1000 implementiert sein, wie durch die gestrichelte Erweiterung der Kernfunktionalität 1000 in Fig. 1 angedeutet ist.

Die Eingabeeinrichtung 1010, der Datenspeicher 1020 und der GPS-Sensor 1030 stehen mit der Kernfunktionalität 1000 in kommunizierender Verbindung. Die Kernfunktionalität 1000 bezieht Eingabeinformationen zu einer vorgegebenen Suchzeit (t_{S}), einer vorgegebenen POI-Trefferzahl (N_{S}) sowie zu einer vorgegebenen POI-Klasse von der Eingabeeinrichtung 1010. Diese Informationen werden zumindest teilweise (z.B. POI-Klasse) oder vollständig von einem Benutzer der Vorrichtung 100 eingegeben. Die vorgegebene Suchzeit (t_{S}) und die vorgegebenen POI-Trefferzahl (N_{S}) können jedoch auch von der Kernfunktionalität 1000 algorithmisch ermittelt oder fest vorgegeben werden. Ferner bezieht die Kernfunktionalität 1000 über den GPS-Sensor 1030 Ortungsinformationen und über den Datenspeicher 1020 Informationen zu vorab gespeicherten kartographischen Daten und zu POIs.

Im Datenspeicher 1020 sind in einer Datenbank kartographische Daten abgespeichert. Ferner umfasst der Datenspeicher 1020 eine POI-Datenbank, in welcher geographisch nah beieinander liegende POIs zusammengefasst und jeweils als POI-Cluster abgespeichert sind. Die abgespeicherten POI-Cluster in der POI-Datenbank sind dabei mit den abgespeicherten kartographischen Daten verknüpft, so dass einzelnen durch kartographische Daten definierte kartographischen Regionen (oder Ausschnitten davon) POI-Cluster zuordenbar sind.

Die Bestimmungseinrichtung 1040 bestimmt auf Basis der vom GPS-Sender 1030 erhaltenen Ortungsinformationen (oder vom Benutzer eingegebener geographischer Koordinaten) und der vom Datenspeicher 1020 abgerufenen kartographischen Daten ein anfängliches Suchfeld, welches einem Ausschnitt einer kartographischen Region um einen den Ortungsinformationen entsprechenden Standort entspricht. Dabei wird die Größe des anfänglichen Suchfelds beispielsweise auf Basis von im Datenspeicher 1020 zusätzlich abgespeicherten Daten über lokale POI-Dichten ermittelt. Jedenfalls wird durch die Bestimmungseinrichtung 1040 die Größe des anfänglichen Suchfelds so gewählt, dass nur wenige POI-Cluster bzw. POIs im Suchfeld vorhanden sind. Auf diese Weise wird die anschließende, mittels der Sucheinrichtung 1050 durchgeführte POI-Ermittlung beschleunigt. Die Sucheinrichtung 1050 analysiert dabei die im Suchfeld vorhandenen POI-Cluster und POIs und wählt jene POIs aus, welche einer vorgegebenen POI-Klasse zuordenbar sind. Überschreitet die Zahl der im anfänglichen Suchfeld aufgefundenen POIs die vorgegebene POI-Trefferzahl (N_{S}) nicht und ist die vorgegebene Suchzeit (t_{S}) nicht verstrichen, so vergrößert die Bestimmungseinrichtung 1040 das Suchfeld, um weitere POIs zu ermitteln.

Während der POI-Ermittlung ermittelt oder aktualisiert die Einrichtung 1060 zur Bestimmung von Suchzeit und POI-Trefferzahl eine verstrichene Suchzeit (t) und eine aktuelle POI-Trefferzahl (N). Die Einrichtung 1060 vergleicht ferner die ermittelten Werte für Suchzeit (t) und POI-Trefferzahl (N) mit den Werten der vorgegebenen Suchzeit (t_{S}) und der vorgegebenen POI-Trefferzahl (N_{S}), welche jeweils einen Schwellenwert für einen Abbruch der POI-Ermittlung darstellen. Für die Bestimmung der verstrichenen Suchzeit (t) umfasst die Einrichtung 1060 vorzugsweise einen Zeitgeber. Alternativ hierzu kann die Einrichtung 1060 die verstrichene Suchzeit (t) durch Zählen von Prozessorzyklen der Kernfunktionalität 1000 bestimmen.

Die Sortiereinrichtung 1070 ist schließlich dazu eingerichtet, die von der Sucheinrichtung 1050 im Suchfeld aufgefundenen POIs in Abhängigkeit ihrer Entfernung vom vorgegebenen Standort zu sortieren und in einer Ergebnisliste aufzunehmen.

Die Ausgabeeinrichtung 1080 ist dazu eingerichtet die sortierten POIs optisch und/oder akustisch auszugeben. In einer bevorzugten Ausführung werden die sortierten POIs in Form einer Ergebnisliste ausgegeben. Alternativ hierzu können die POIs als Symbole zusammen mit einer visuell erzeugten Karte angezeigt werden. Ferner kann eine Auswahlfunktionalität zur Auswahl eines der POIs als Zielpunkt (z.B. für die Routenplanung und Routenführung) vorhanden sein.

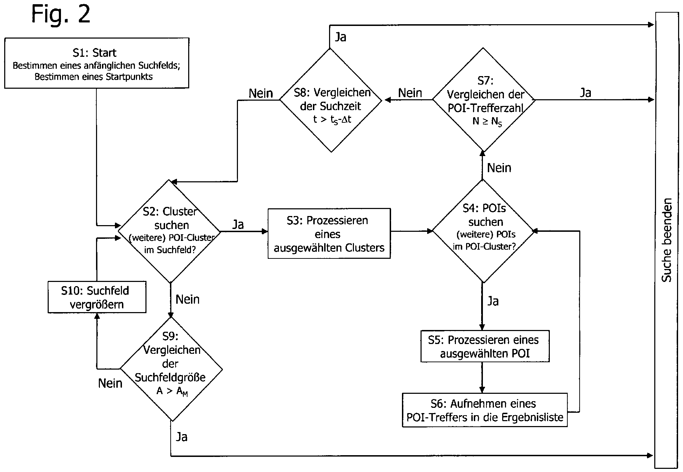

Im Folgenden wird unter Bezugnahme auf das in Fig. 2 dargestellte Flussdiagramm ein Ausführungsbeispiel des erfindungsgemäßen Verfahrens zum Bestimmen von POIs in einer Umgebung eines vorgegebenen Standorts erläutert. Das Verfahren wird anhand der in Fig. 1 dargestellten Navigationsvorrichtung 100 erläutert, kann aber auch von anderweitig konfigurierten Geräten durchgeführt werden.

In einem ersten Schritt S1 wird mit Hilfe der Bestimmungseinrichtung 1040 ein anfängliches Suchfeld auf Basis des vom GPS-Sensor 1030 georteten Standorts sowie auf Basis von im Datenspeicher 1020 abgespeicherten kartographischen Daten bestimmt. Die Größe des anfänglichen Suchfelds wird dabei auf Basis der im Datenspeicher 1020 abgespeicherten POI-Cluster hinreichend klein gewählt, so dass nur wenige POI-Cluster im anfänglichen Suchfeld liegen und eine ressourcensparende und schnelle Durchführung der im Folgenden beschriebenen Verfahrensschritte in der Navigationsvorrichtung 100 gewährleistet ist.

Gleichzeitig wird mit dem ersten Schritt S1 ein Startzeitpunkt für die Bestimmung der verstrichenen Suchzeit (t) während des Suchvorgangs festgelegt. Vorzugsweise wird hierzu der Zeitgeber der Einrichtung 1060 aktiviert.

In einem zweiten Schritt S2 werden alle POI-Clusters im (anfänglichen) Suchfeld ermittelt. Befindet sich kein POI-Cluster im Suchfeld so wird mit den Schritten S9 und S10 des Verfahrens fortgefahren, welche weiter unten beschrieben werden. Weist das (anfängliche) Suchfeld wenigstens einen POI-Cluster auf, so wird zunächst ein POI-Cluster ausgewählt. Die Auswahl des POI-Cluster kann dabei auf Basis einer Entfernungsbestimmung vom vorgegebenen Standort erfolgen.

Im darauffolgenden Schritt S3 wird der ausgewählte POI-Cluster vom Datenspeicher 1020 abgerufen und prozessiert. Umfasst der POI-Cluster wenigstens einen POI, so wird ein erster POI in Schritt S4 abgerufen und durch die Sucheinrichtung 1050 in Schritt S5 weiter prozessiert. Ist dabei der abgerufene POI der (durch den Benutzer) vorgegebenen POI-Klasse zuordenbar, so wird der POI in Schritt S6 in eine Ergebnisliste als POI-Treffer eingetragen. Anderenfalls wird der abgerufene POI verworfen. Die Verfahrensschritte S4 bis S6 werden iterativ so lange wiederholt bis alle POIs des ausgewählten POI-Clusters prozessiert worden sind.

Sind in Schritt S4 alle POIs des ausgewählten POI-Cluster für die Prozessierung in Schritt S5 abgerufen worden, so fährt das Verfahren mit Schritt S7 fort. Hierbei wird mittels der Einrichtung 1060 zunächst die aktuelle Zahl der POI-Treffer bestimmt und mit der vorgegebenen POI-Trefferzahl (N_{S}) verglichen. Übersteigt die aktuelle POI-Trefferzahl (N) die vorgegebene Trefferzahl (N_{S}), so wird der POI-Suchvorgang beendet. Ist jedoch die Zahl der gefundenen POIs im ausgewählten POI-Cluster kleiner als die vorgegebene POI-Trefferzahl (N_{S}), so wird in einem Schritt S8 die verstrichene Suchzeit (t) bestimmt und mit der vorgegebenen Suchzeit (t_{S}) verglichen. Übersteigt dabei die aktuell bestimmte Suchzeit (t) einen Schwellenwert (T) für die vorgegebene Suchzeit (t_{S}), so wird der POI-Suchvorgang beendet. Andernfalls springt das Verfahren auf Schritt S2 zurück, um einen weiteren POI-Cluster im Suchfeld auszuwählen und gemäß der oben beschriebenen Schrittfolge zu prozessieren. Es versteht sich, dass die in Fig. 2 dargestellte und hier beschriebene Abfolge der Vergleichsschritte S7 und S8 vertauschbar ist, ohne dass dadurch die POI-Ermittlung beeinflusst wird, indem zuerst die verstrichene Suchzeit (t) mit der vorgegebenen Suchzeit (t_{S}) (S8) und danach die POI-Trefferzahl (N) mit der vorgegebenen POI-Trefferzahl (N_{S}) (S7) verglichen wird.

Der Schwellenwert (T) verkürzt die vorgegebene Suchzeit (t_{S}) um eine vorgegebene Zeitmarge (Δt). Auf diese Weise wird verhindert, dass die (absolut) vorgegebene Suchzeit (t_{S}) während zwei aufeinanderfolgender Bestimmungen der Suchzeit überschritten wird. Die Zeitmarge (Δt) wird vom Benutzer vorgegeben. Alternativ hierzu kann der Wert der Zeitmarge (Δt) fest vorgegeben sein oder in einem festen Verhältnis zur vorgegebenen Suchzeit (t_{S}) stehen.

In der hier beschriebenen Weise wird nach jedem POI-Cluster die aktuelle POI-Trefferzahl (N) und die verstrichene Suchzeit (t) mit den vorgegebenen Werten für POI-Trefferzahl (N_{S}) und Suchzeit (t_{S}) verglichen und bei Überschreitung der vorgegebenen POI-Trefferzahl (N_{S}) oder der vorgegebenen Suchzeit (t_{S}) der Suchvorgang abgebrochen. Es versteht sich, dass die Schritte S9 und S10, welche jeweils ein Abbruchkriterium für die POI-Suche darstellen, auch nach jedem POI-Treffer oder erst nach Prozessieren mehrerer POI-Cluster durchgeführt werden kann.

Sind in Schritt S2 alle POI-Cluster des Suchfelds bereits zum Prozessieren ausgewählt worden oder umfasst das anfängliche Suchfeld keinen POI-Cluster, so fährt das Verfahren mit Schritt S9 fort. In diesem Fall wird zunächst das Suchfeld einem Vergleich unterzogen, wobei der Suchvorgang dann abgebrochen wird, wenn eine aktuelle Suchfeldgröße (A) einen vorgegebenen Schwellenwert (A_{M}) für die Suchfeldgröße überschreitet. Andernfalls wird das Suchfeld mit Hilfe der Bestimmungseinrichtung 1040 in Schritt S10 vergrößert, wobei das neue, vergrößerte Suchfeld den Ausgangspunkt für eine Fortsetzung der POI-Suche anhand von neuen, noch unprozessierten POI-Clustern bildet. Die Suchfeldvergrößerung erfolgt derart, dass sich beim Vergrößern des Suchfeldes die Suchfeldfläche verdoppelt. Bei einem rechteckigem Suchfeld wird also seine Diagonale um den Faktor √2 vergrößert.

Das in Fig. 2 dargestellte und oben beschriebene Verfahren ermöglicht somit eine schnelle und ressourcensparende Bestimmung von POIs in der Umgebung eines vorgegebenen (georteten) Standorts, indem als Abbruchkriterium für den Suchvorgang eine Suchzeit und/oder POI-Trefferzahl vorgegeben werden. Die Größe des Suchfeldes wird nicht als Parameter vorgegeben (beispielsweise durch Vorgabe eines Suchradius) sondern auf Basis eines anfänglichen Suchfeldes iterativ vergrößert. Auf diese Weise ist es möglich, unabhängig vom vorgegebenen Standort die POI-Suche auf eine beschränkte Suchzeit und wenige POI-Treffer zu beschränken.

## Patentansprüche

1. Verfahren zum Ermitteln von Points Of Interest, oder POIs, in einer Umgebung eines vorgegebenen Standorts mit bekannten Koordinaten auf Basis digitaler kartographischer Daten und einer von einem Benutzer vorgegebenen Suchzeit (t_{S}) und einer vorgegebenen POI-Trefferzahl (N_{S}), wobei das Verfahren durch eine in einem Kraftfahrzeug verbauten Navigationsvorrichtung oder durch ein tragbares Gerät durchgeführt wird, wobei das Verfahren die folgenden Schritte umfasst:
- Ermitteln (S1) eines den vorgegebenen Standort umfassenden anfänglichen Suchfelds auf Basis der kartographischen Daten;
- Suchen (S2, S3, S4) nach POIs im Suchfeld;
- Vergleichen (S7) einer Trefferzahl (N) aufgefundener POIs mit der vorgegebenen POI-Trefferzahl (Ns);
- Einstellen einer Zeitmarge (Δt), die in einem festen Verhältnis zur vorgegebenen Suchzeit (ts) steht;
- Berechnen eines Schwellenwerts (T) aus einer Differenz aus der vorgegebenen Suchzeit (ts) und der Zeitmarge (Δt);
- Vergleichen (S8) einer verstrichenen Suchzeit (t) mit dem Schwellenwert (T);
- iteratives Vergrößern (S10) des Suchfelds und Suchen nach POIs im vergrößerten Suchfeld, wenn die Trefferzahl (N) aufgefundener POIs kleiner als die vorgegebene POI-Trefferzahl (N_{S}) ist und wenn die verstrichene Suchzeit (t) den Schwellenwert (T) nicht übersteigt; und
- Beenden der POI-Suche, wenn die Trefferzahl (N) aufgefundener POIs größer oder gleich der vorgegebenen POI-Trefferzahl (Ns) ist oder wenn die verstrichene Suchzeit (t) größer als der Schwellenwert (T) ist.

2. Verfahren nach Anspruch 1, wobei die POIs in Klassen eingekeilt sind und wobei nach POIs wenigstens einer vorgegebenen POI-Klasse gesucht wird.

3. Verfahren nach Anspruch 2, wobei die vorgegebene Suchzeit (ts) und vorgegebene POI-Trefferzahl (N_{S}) für jede der wenigstens einen vorgegebenen POI-Klasse vorgegeben sind und wobei das Suchfeld so lange vergrößert wird, bis die verstrichene Suchzeit (t) größer als der Schwellenwert (T) ist oder Ns POI-Treffer für jede vorgegebene POI-Klasse erreicht werden.

4. Verfahren nach einem der vorhergehenden Ansprüche, wobei die POI-Ermittlung im Suchfeld anhand von POI-Clustern durchgeführt wird, wobei geographisch nah beieinander liegende POIs zu einem POI-Cluster zusammengefasst sind.

5. Verfahren nach Anspruch 4, wobei ein Suchfeld dann vergrößert wird, wenn alle im Suchfeld liegenden POI-Cluster für die POI-Ermittlung prozessiert wurden.

6. Verfahren nach einem der vorhergehenden Ansprüche, ferner umfassend Bestimmen der verstrichenen Suchzeit (t) während der POI-Ermittlung, wobei die verstrichene Suchzeit (t) ab Beginn der POI-Suche berechnet wird.

7. Verfahren nach einem der vorhergehenden Ansprüche, wobei das Suchfeld so lange vergrößert wird, bis die Größe des Suchfeldes einen vorgegebenen Schwellenwert (A_{M}) für die Suchfeldgröße erreicht hat.

8. Verfahren nach einem der vorhergehenden Ansprüche, ferner umfassend Sortieren der aufgefundenen POIs in Abhängigkeit ihrer Entfernung zum vorgegebenen Standort und Aufnehmen (S6) der sortierten POIs in einer Ergebnisliste.

9. Computerprogrammprodukt mit Programmcode zum Durchführen des Verfahrens nach wenigstens einem der vorhergehenden Ansprüche, wenn das Computerprogrammprodukt auf einer Computereinrichtung ausgeführt wird.

10. Computerprogrammprodukt nach Anspruch 9, welches auf einem computerlesbaren Aufzeichnungsmedium abgespeichert ist.

11. Vorrichtung (100) zum Ermitteln von Points Of Interest, oder POIs, in einer Umgebung eines vorgegebenen Standorts mit bekannten Koordinaten auf Basis digitaler kartographischer Daten und einer von einem Benutzer vorgegebenen Suchzeit (ts) und einer vorgegebenen POI-Trefferzahl (Ns), wobei die Vorrichtung (100) eine in einem Kraftfahrzeug verbaute Navigationsvorrichtung oder ein tragbares Gerät ist, umfassend:
- eine zentrale Verarbeitungseinheit (1000) zum Einstellen einer Zeitmarge (Δt), die in einem festen Verhältnis zur vorgegebenen Suchzeit (ts) steht, und zum Berechnen eines Schwellenwerts (T) aus einer Differenz aus der vorgegebenen Suchzeit (ts) und der Zeitmarge (Δt);
- einen Datenspeicher (1020) zur Speicherung digitaler kartographischer Daten;
- eine Bestimmungseinrichtung (1040), die eingerichtet ist, um ein den vorgegebenen Standort umfassendes anfängliches Suchfeld auf Basis der kartögraphischen Daten zu ermitteln und iterativ zu vergrößern;
- eine Sucheinrichtung (1050), die eingerichtet ist, um POIs im Suchfeld zu suchen; und
- eine Einrichtung (1060) zur Bestimmung einer verstrichenen Suchzeit (ts) und einer POI-Trefferzahl (N) von der Sucheinrichtung (1050) aufgefundener POIs während der POI-Ermittlung, wobei die Einrichtung (1060) ferner eingerichtet ist, die Trefferzahl (N) aufgefundener POIs mit der vorgegebenen POI-Trefferzahl (Ns) zu vergleichen, eine verstrichene Suchzeit (t) mit dem Schwellenwert (T) zu vergleichen, und die POI-Suche abzubrechen, wenn die Trefferzahl (N) aufgefundener POIs größer oder gleich der vorgegebenen POI-Trefferzahl (Ns) ist oder wenn die verstrichene Suchzeit (t) größer als der Schwellenwert (T) ist,
wobei die Bestimmungseinrichtung (1040) eingerichtet ist, das Suchfeld iterativ zu vergrößern, wenn die Trefferzahl (N) aufgefundener POIs kleiner als die vorgegebene POI-Trefferzahl (Ns) ist und wenn die verstrichene Suchzeit (t) den Schwellenwert (T) nicht übersteigt.

12. Vorrichtung (100) nach Anspruch 11, ferner umfassend:
- eine Eingabeeinrichtung (1010) zur Eingabe einer vorgegebenen Suchzeit (ts) und/oder einer vorgegebenen POI-Trefferzahl (N_{S});
- eine Sortiereinrichtung (1070), die dazu eingerichtet ist, die aufgefundenen POIs in Abhängigkeit ihrer Entfernung zum vorgegebenen Standort zu sortieren und in einer Ergebnisliste aufzunehmen; und
- eine Ausgabeeinrichtung (1080) zum Darstellen der Ergebnisliste.

13. Vorrichtung (100) nach Anspruch 11, wobei der Datenspeicher (1020) ferner eine POI-Datenbank umfasst, in welcher geographisch nah beieinander liegende POIs als POI-Cluster zusammengefasst und abgespeichert sind.

14. Vorrichtung (100) nach Anspruch 12 oder 13, ferner umfassend eine Einrichtung zum Aufbau einer Online-Verbindung mit einem Netzwerk, um vorprozessierte kartographische Daten und/oder POI-Daten für die POI-Ermittlung abzurufen.

## Claims

1. A method for determining points of interest, or POIs, in a vicinity of a predetermined location with known coordinates, on the basis of digital cartographic data and a search time (t_{S}) predetermined by a user and a predetermined number of POI hits (N_{S}), the method being performed in a navigation device mounted into a vehicle or in a mobile device, the method comprising the following steps:
- determining (S1) on the basis of the cartographic data, an initial search field that includes the predetermined location;
- searching (S2, S3, S4) for POIs in the search field;
- comparing (S7) a number of POI hits (N) with the predetermined number of POI hits (N_{S});
- setting a time margin (Δt) being in a fixed ratio in relation to the predetermined search time (t_{S});
- calculating a threshold value (T) from a difference of the predetermined search time (t_{S}) and the time margin (Δt);
- comparing (S8) of an elapsed search time (t) with the threshold value (T);
- iteratively enlarging (S10) the search field and searching for POIs in the enlarged search field, if the number of POI hits (N) is smaller than the predetermined number of POI hits (N_{S}) and if the elapsed search time (t) does not exceed the threshold value (T); and
- terminating the POI search, if the number of POI hits (N) is greater or equal to the predetermined number of POI hits (N_{S}) or if the elapsed search time (t) exceeds the threshold value (T).

2. The method according to claim 1, wherein the POIs are divided into classes, and wherein POIs of at least one predetermined POI class are searched.

3. The method according to claim 2, wherein the predetermined search time (t_{S}) and the predetermined number of POI hits (N_{S}) are predetermined for each of the at least one predetermined POI class, and wherein the search field is enlarged until the predetermined search time (t) exceeds the threshold value (T) or Ns POI hits are attained for each predetermined POI class.

4. The method according to one of the preceding claims, wherein POI determination in the search field is performed on the basis of POI clusters, wherein POIs that are geographically close to one another are combined to form a POI cluster.

5. The method according to claim 4, wherein a search field is enlarged when all POI clusters present in the search field have been processed for POI determination.

6. The method according to one of the preceding claims, further comprising determining the elapsed search time (t) during POI determination, wherein the elapsed search time (t) is calculated from the commencement of the POI search.

7. The method according to one of the preceding claims, wherein the search field is enlarged until the size of the search field has attained a predetermined threshold value (A_{M}) for the search field size.

8. The method according to one of the preceding claims, further comprising sorting the found POIs in dependence on their distance from the predetermined location and recording (S6) the sorted POIs in a results list.

9. A computer program product including program code for performing the method according to at least one of the preceding claims when the computer program product is executed on a computer device.

10. The computer program product according to claim 9, which is stored on a computer readable recording medium.

11. A device (100) for determining points of interest, or POIs, in a vicinity of a predetermined location with known coordinates, on the basis of digital cartographic data and a search time (t_{S}) predetermined by a user and a predetermined number of POI hits (N_{S}), wherein the device (100) is a navigation device mounted into a vehicle or a mobile device, comprising:
- a central processing unit (1000) for setting a time margin (Δt) being in a fixed ratio in relation to the predetermined search time (tₛ), and for calculating a threshold value (T) from a difference of the predetermined search time (tₛ) and the time margin (Δt);
- a data memory (1020) for storing digital cartographic data;
- determining means (1040) configured for determining, on the basis of the cartographic data, an initial search field that includes the predetermined location and for iteratively enlarging the search field;
- searching means (1050) configured for searching for POIs in the search field; and
- means (1060) for determining an elapsed search time (t) and a number of POI hits (N) found by the searchiing means (1050) during POI determination, wherein the means (1060) is further configured for comparing the number of POI hits (N) with the predetermined number of POI hits (Nₛ), for comparing an elapsed search time (t) with the threshold value (T), and for terminating the POI search, if the number of POI hits (N) is greater or equal to the predetermined number of POI hits (Nₛ) or if the elapsed search time (t) exceeds the threshold value (T),
wherein the determining means (1040) is configured for iteratively enlarging the search field, if the number of POI hits (N) is smaller than the predetermined number of POI hits (Nₛ) and if the elapsed search time (t) does not exceed the threshold value (T).

12. The device (100) according to claim 11, further comprising:
- inputting means (1010) for inputting a predetermined search time (tₛ) and/or a predetermined number of POI hits (Nₛ);
- sorting means (1070) configured for sorting found POIs in dependence on their distance from the predetermined location and to record them in a results list; and
- outputting means (1080) for depicting the results list.

13. The device (100) according to claim 11, wherein the data memory (1020) further comprises a POI database, in which POIs that are geographically close to one another are combined and stored as POI clusters.

14. The device (100) according to claim 12 or 13, further comprising means for establishing an online connection to a network, in order to retrieve at least one of preprocessed cartographic data and POI data for POI determination.

## Revendications

1. Procédé de détermination de points d'intérêts, ou POI, dans un environnement d'un lieu prédéfini de coordonnées connues sur la base de données cartographiques numériques, d'un temps de recherche (ts) prédéfini par un utilisateur et d'un nombre d'occurrences de POI prédéfini (Ns), lequel procédé étant mis en oeuvre par un dispositif de navigation embarqué dans un véhicule automobile ou par un appareil portable et comprenant les étapes suivantes :
- détermination (S1) d'un champ de recherche initial comprenant le lieu prédéfini sur la base des données cartographiques ;
- recherche (S2, S3, S4) de POI dans le champ de recherche ;
- comparaison (S7) d'un nombre d'occurrences (N) de POI trouvés avec le nombre d'occurrences de POI prédéfini (Ns) ;
- réglage d'une marge de temps (Δt) qui est dans un rapport fixe avec le temps de recherche prédéfini (ts) ;
- calcul d'une valeur seuil (T) à partir d'une différence entre le temps de recherche prédéfini (ts) et la marge de temps (Δt);
- comparaison (S8) d'un temps de recherche écoulé (t) avec la valeur seuil (T) ;
- agrandissement itératif (S10) du champ de recherche et recherche de POI dans le champ de recherche agrandi si le nombre d'occurrences (N) de POI trouvés est inférieur au nombre d'occurrences de POI prédéfini (Ns) et si le temps de recherche écoulé (t) ne dépasse pas la valeur seuil (T) ; et
- fin de la recherche de POI si le nombre d'occurrences (N) de POI trouvés est supérieur ou égal au nombre d'occurrences de POI prédéfini (Ns) ou si le temps de recherche écoulé (t) est supérieur à la valeur seuil (T).

2. Procédé selon la revendication 1, dans lequel les POI sont répartis en classes et dans lequel on recherche des POI d'au moins une classe de POI prédéfinie.

3. Procédé selon la revendication 2, dans lequel le temps de recherche prédéfini (ts) et le nombre d'occurrences de POI prédéfini (Ns) sont prédéfinis pour chacune desdites au moins une classe de POI prédéfinie et dans lequel le champ de recherche est agrandi jusqu'à ce que le temps de recherche écoulé (t) soit supérieur à la valeur seuil (T) ou que Ns occurrences de POI pour chaque classe de POI prédéfinie aient été atteintes.

4. Procédé selon l'une des revendications précédentes, dans lequel la détermination de POI dans le champ de recherche est effectuée à l'aide de groupes de POI, des POI géographiquement proches étant regroupés en un groupe de POI.

5. Procédé selon la revendication 4, dans lequel un champ de recherche est agrandi lorsque tous les groupes de POI situés dans le champ de recherche ont été traités pour la détermination de POI.

6. Procédé selon l'une des revendications précédentes, comprenant en outre la détermination du temps de recherche écoulé (t) pendant la détermination de POI, le temps de recherche écoulé (t) étant calculé à partir du début de la recherche de POI.

7. Procédé selon l'une des revendications précédentes, dans lequel le champ de recherche est agrandi jusqu'à ce que la taille du champ de recherche ait atteint une valeur seuil prédéfinie (A_{M}) de la taille du champ de recherche.

8. Procédé selon l'une des revendications précédentes, comprenant en outre le tri des POI trouvés en fonction de leur distance par rapport au lieu prédéfini et l'ajout (S6) des POI triés dans une liste de résultats.

9. Produit-programme informatique avec un code de programme pour mettre en oeuvre le procédé selon au moins l'une des revendications précédentes lorsque le produit-programme informatique est exécuté sur un moyen informatique.

10. Produit-programme informatique selon la revendication 9, lequel est stocké sur un support d'enregistrement lisible par un ordinateur.

11. Dispositif (100) de détermination de points d'intérêts (Points Of Interest), ou POI, dans un environnement d'un lieu prédéfini de coordonnées connues sur la base de données cartographiques numériques, d'un temps de recherche (ts) prédéfini par un utilisateur et d'un nombre d'occurrences de POI prédéfini (Ns), lequel dispositif (100) étant un dispositif de navigation embarqué dans un véhicule automobile ou un appareil portable et comprenant :
- une unité centrale de traitement (1000) pour régler une marge de temps (Δt) qui est dans un rapport fixe avec le temps de recherche prédéfini (ts) et pour calculer une valeur seuil (T) à partir d'une différence entre le temps de recherche prédéfini (ts) et la marge de temps (Δt);
- une mémoire de données (1020) pour mémoriser des données cartographiques numériques ;
- un moyen de détermination (1040) agencé pour déterminer un champ de recherche initial comprenant le lieu prédéfini sur la base des données cartographiques et pour l'agrandir itérativement ;
- un moyen de recherche (1050) agencé pour rechercher des POI dans le champ de recherche ; et
- un moyen (1060) pour déterminer un temps de recherche écoulé (ts) et un nombre d'occurrences de POI (N) de POI trouvés par le moyen de recherche (1050) pendant la détermination de POI, le moyen (1060) étant en outre agencé pour comparer le nombre d'occurrences (N) de POI trouvés avec le nombre d'occurrences de POI prédéfini (Ns), pour comparer un temps de recherche écoulé (t) avec la valeur seuil (T) et pour interrompre la recherche de POI si le nombre d'occurrences (N) de POI trouvés est supérieur ou égal au nombre d'occurrences de POI prédéfini (Ns) ou si le temps de recherche écoulé (t) est supérieur à la valeur seuil (T),
dans lequel le moyen de détermination (1040) est agencé pour agrandir itérativement le champ de recherche si le nombre d'occurrences (N) de POI trouvés est inférieur au nombre d'occurrences de POI prédéfini (Ns) et si le temps de recherche écoulé (t) ne dépasse pas la valeur seuil (T).

12. Dispositif (100) selon la revendication 11, comprenant en outre :
- un moyen d'entrée (1010) pour entrer un temps de recherche prédéfini (t_{S}) et/ou un nombre d'occurrences de POI prédéfini (Ns) ;
- un moyen de tri (1070) qui est agencé pour trier les POI trouvés en fonction de leur distance par rapport au lieu prédéfini et les ajouter dans une liste de résultats ; et
- un moyen de sortie (1080) pour représenter la liste de résultats.

13. Dispositif (100) selon la revendication 11, dans lequel la mémoire de données (1020) comprend en outre une base de données de POI dans laquelle les POI géographiquement proches sont regroupés et stockés sous la forme de groupes de POI.

14. Dispositif (100) selon la revendication 12 ou 13, comprenant en outre un moyen pour établir une connexion en ligne avec un réseau, afin de consulter des données cartographiques prétraitées et/ou des données de POI pour la détermination de POI.
